# EUROPEAN PATENT APPLICATION

(11) **EP 3 995 316 A1**
(43) Date of publication of application: **11.05.2022**
(21) Application number: 21206806.8
(22) Date of filing: 05.11.2021
(51) Int. Cl.: B41J 11/00, B65G 17/06, B65G 17/32, B65G 17/46, B65G 21/22, B65H 5/22, B65H 29/24

(54) **SEGMENTED CONVEYOR FOR HIGH RESOLUTION COLOR INKJET PRINTING WITH REDUCED PRINT DEFECTS**

(30) Priority: 09.11.2020 US 202063111181 P; 04.11.2021 US 202117518709
(71) Applicant: Prototype and Production Systems, Inc., Minneapolis, MN 55429 (US)
(72) Inventor: RAYMOND, Willard Charles, Plymouth, 55441 (US); KAUFHOLD, Anthony David, Chaska, 55318 (US)
(74) Representative: Abel & Imray LLP

(57) **Abstract**

An apparatus and method of conveying parts underneath an array of inkjet printheads in such a way as to minimize print defects caused by variation in motion. The conveyor is composed of a series of rigid conveyor track segments that are forced to move in a precise straight line due to a combination of accurate ball bearing wheel assemblies and precision machine guideways that are incorporated into the conveying system.

## Description

### Field of Invention

The present invention relates generally to the field of ink jet printers, and more particularly to the construction of a conveyor apparatus used in connection with such printers to reduce print defects during advancement of a printable substrate in high resolution color printing applications.

### Background

The statements in this section merely provide background information related to the present disclosure and may not constitute prior art.

Flexible conveyor belts are often used to move parts underneath arrays of printheads for printing. Print quality of color printing is dependent upon the conveyor moving the printable substrate in a straight line. Any deviation from straight-line motion results in color-to-color registration error that reduces print quality. Inkjet print heads are now available with much higher resolution than previously, which places increasingly stringent accuracy requirements on color-to-color registration.

Meeting these requirements with flexible conveyor belts can be difficult or impossible. Flexible conveyor belts have a tendency to wander during operation causing misalignment and registration errors with the printable substrate. The effect of thermal expansion on the system is also an important factor that must be mitigated. During operation, the equipment will likely begin at a relatively cool ambient temperature. As operation continues, the conveyor system can fluctuate in temperature causing thermal expansion and contraction, thus leading to tracking/printing errors. If unaccounted for, the effect of expansion and contraction in the system can have a negative impact on belt timing, tracking, tension, and surface flatness. Other outside forces may also be cause for tracking errors in such belt conveyor systems.

Accordingly, there is a distinct need in the field of high resolution color inkjet printing for a conveyor system which will help resolve the misalignment and print registration deficiencies of conventional flexible belt printers. The rigid segmented conveyor system described herein helps to resolve these problems and can be made as accurate as required for the new generation of high-resolution print heads.

### Summary

In the present invention, the conveyor platform upon which a printable substrate is carried is comprised of a plurality of separate individual rigid conveyor track segments which are connected together but independently movable relative to each other. The individual conveyor track segments are connected to a chain (or timing belt) that moves them around the conveyor path. Each track segment includes one or more rotatable wheel bearings connected to opposite transverse sides thereof which effect precise guided movement of the track segment along the path of conveyance. While being moved around the conveyor path, the wheels on opposite sides of each conveyor track segment are constructed to engage mating guideways that are fixed to the frame of the conveyor. This stationary guideway system restricts the motion of each conveyor track segment to precisely a straight line at the correct height.

In one preferred embodiment of the present conveyor system, a generally V-shaped feature of each wheel bearing assembly engages with a corresponding mating V-shaped guide feature of the stationary guideway system. Of course, other possible mating wheel and track configurations are certainly conceivable without departing from the invention herein. The wheel(s) at one side of each conveyor track segment are free to rotate only, i.e., these wheels are fixed to the conveyor track segment in the axial direction. The wheel(s) on the other end of each conveyor track segment are free to move axially as well as rotationally. This allows the motion of each conveyor track segment to be precisely controlled without over-constraining each conveyor track segment.

Each rigid conveyor track segment is also preferably constructed as a substantially hollow shell with opposing end blocks for mounting the respective wheel bearings. A plurality of minor vent openings formed in the upper surface of each track segment upon which the printable substrate is carried communicate with the hollow interior thereof. The underside of each track segment also includes one or more openings which are adapted to register in substantially sealed relation during conveyance with a vacuum system that is connected to an underside portion of the conveyor system. In this manner, as the printable substrate advances along the conveyor, suction created by the vacuum system within each conveyor segment helps to hold the printable substrate in its proper precise location upon the conveyor.

The foregoing and additional features and advantages of the present invention will be more readily apparent from the following detailed description. It should be understood, however, that the description and specific examples herein are intended for purposes of illustration only and are not intended to limit the scope of the present disclosure.

### Drawings

The drawings described herein are for illustration purposes only and are not intended to limit the scope of the present disclosure in any way.
Fig. 1 is an isometric view of an overall printing system using a segmented conveyor system constructed in accordance with the present invention;
Fig. 2 is an isometric view of the conveyor system as shown in Fig. 1 composed of a number of rigid conveyor track segments;
Fig. 3 is a close-up isometric transverse sectional view of a portion of the conveyor shown in Fig. 2, taken along lines 3-3, showing the detail of the individual segmented track sections and underside vacuum system;
Fig. 4 is a partial cross-sectional view of the proximal end portion of the conveyor system as shown in Fig. 2, taken along lines 4-4, showing the opposing wheel bearing assemblies, vacuum system and drive axle mechanism connected to the end portion of the segmented conveyor system;
Fig. 5 is a close-up view of a portion of the segmented conveyor system shown in Fig. 4, identified as Section 5 therein, showing a wheel bearing assembly on one side of a conveyor track segment, which is rotationally and axially free in movement, engaging the fixed guideway track of the conveyor;
Fig. 6 is a close-up view of a portion of the segmented conveyor system shown in Fig. 4, identified as Section 6 therein, showing a wheel bearing assembly on the opposite side a conveyor track segment, which is rotationally free in movement but axially fixed, engaging the fixed guideway track of the conveyor;
Fig. 7 is a close-up cross-sectional view of one track segment of our segmented conveyor system, taken along the Y-plane as shown in Fig. 2, showing the construction of the pair of rotationally free but axially fixed wheel bearing assemblies thereof; and
Fig. 8 is a close-up cross-sectional view of one track segment of our segmented conveyor system, taken along the Y-plane as shown in Fig. 2, showing the construction of the rotationally and axially free wheel bearing assembly which is mounted on the opposite end of each conveyor track segment as the pair of wheel bearing assemblies shown in Fig. 7.

### Detailed Description

The following description is merely exemplary in nature and is not intended to limit the present disclosure, application, or uses. It should be understood that throughout the drawings, corresponding reference numerals indicate like or corresponding parts and features.

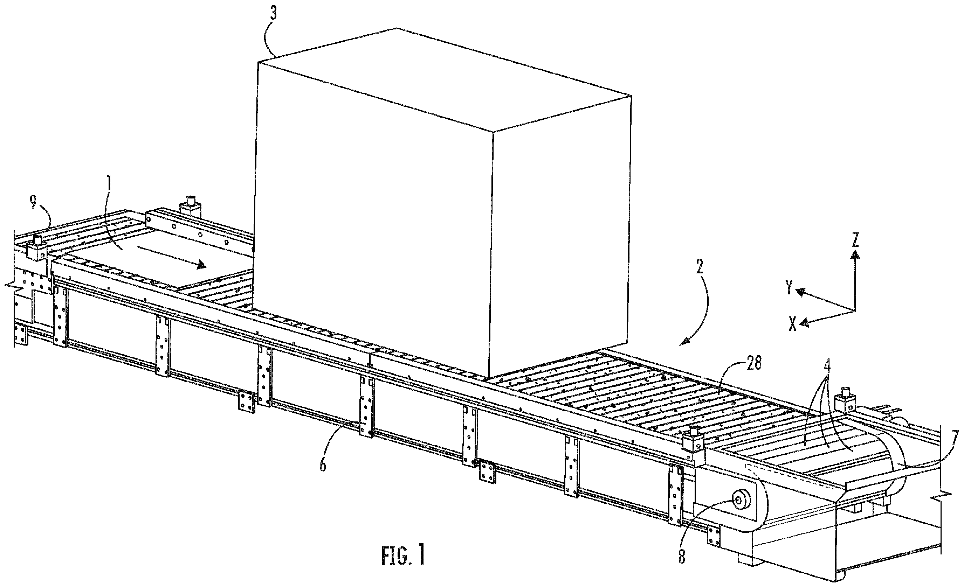

Fig. 1 of the drawings discloses generally an overall printing apparatus upon which a printable substrate 1 is set for advancement on an improved segmented conveyor system 2 which is constructed in accordance with the present invention. With controlled movement, the segmented conveyor system 2 is designed to advance the printable substrate 1 underneath a printhead assembly 3 which deposits ink on the item to be printed.

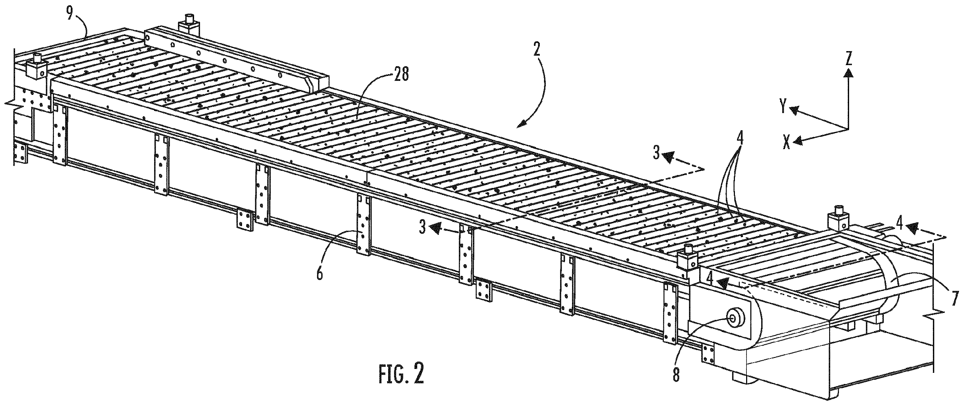

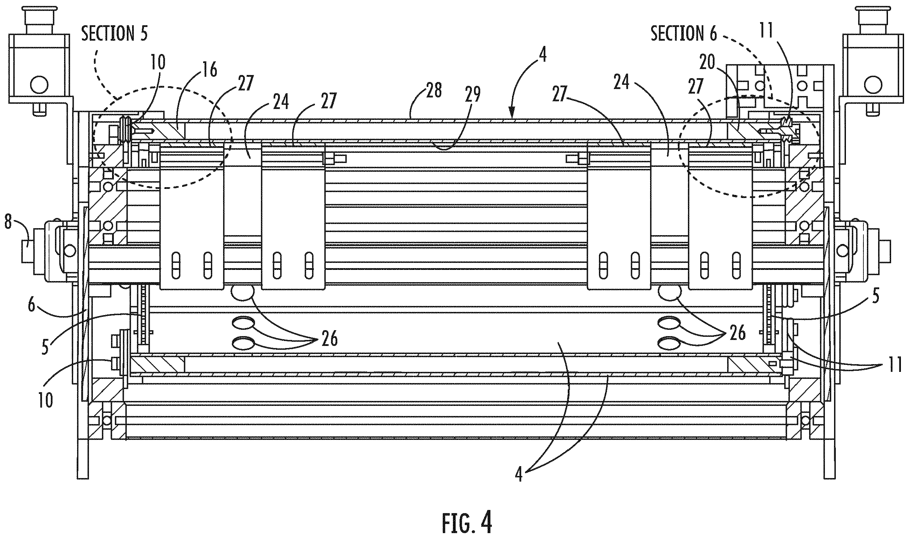

As shown in Figs. 2-4, the conveyor system 2 includes a movable platform comprised of a plurality of individual conveyor track segments 4 that are formed of a rigid material, such as steel, aluminum, rigid plastic, carbon fiber, or other suitably hardened material. The individual conveyor track segments 4 may be solid in construction, or substantially hollow as show in Figs. 4-8. Each of the individual conveyor track segments 4 traverse the conveyor system 2 and are positioned closely adjacent one another in side-by-side orientation along the conveyor path (shown by arrow in Fig. 1).

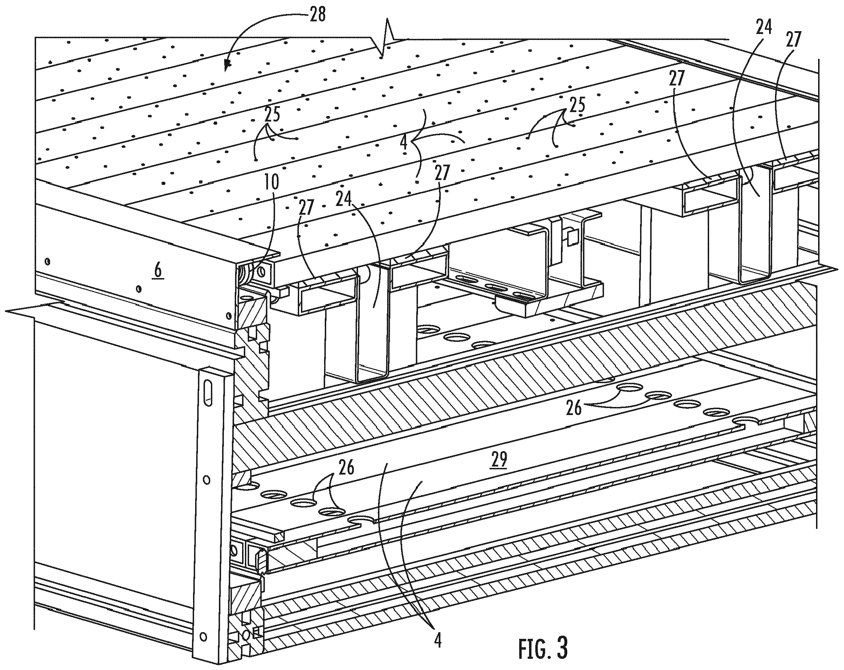

As seen best in Figs. 4-6, the individual conveyor track segments 4 are connected to a chain (or timing belt) 5 that moves them around the conveyor path. As shown, the conveyor system 2 includes a rigid frame structure 6 and drive mechanism (not shown) which supports and engages chain 5 to drive the conveyor track segments 4 in a continuous path around the conveyor 2. At the tail end 7 of the conveyor system 2, an axle member 8 is provided for engagement with chain 5. As best shown in Figs. 3 and 4, the axle member 8 causes each individual conveyor track segment 4 to wrap around from the top of the conveyor 2 to a lower portion of the conveyor for return to the leading end 9 thereof.

As seen in Fig. 4, each of the conveyor track segments 4 includes one or more ball bearing guide wheels 10 and 11 which are rotatably carried on opposite transverse ends of the conveyor track segment 4 for maintaining accurate tracking of the segments during operation of conveyor 2. In the illustrated embodiment, each wheel 10 and 11 is constructed with a central V-shaped annular groove 12 which is adapted to engage with a fixed protruding V-shaped guideway 13 which is affixed to or formed as a part of frame 6 of the conveyor system 2. Of course, it is contemplated that the respective configurations of the wheels 10 and 11 and guideway 13 could be reversed without departing from the invention herein. Also, other configurations are certainly possible for creating a mating wheel tracking and guide system without departing from the scope of the invention herein.

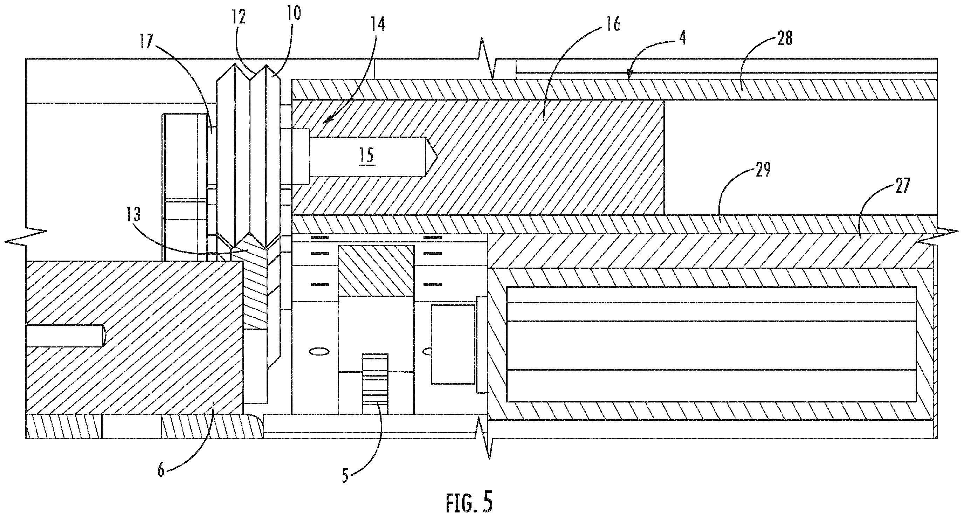

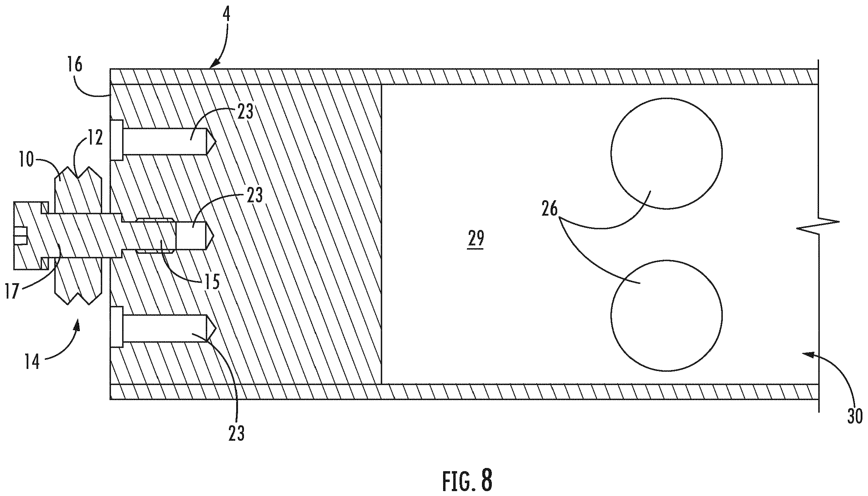

As shown best in Figs. 5 and 8, in the present embodiment, one side of each conveyor track segment 4 (depicted on left side in drawings), carries at least one wheel bearing assembly 14 which is freely rotatable and axially movable relative to the conveyor track segment 4. As shown, wheel bearing assembly 14 is comprised generally of an axle shaft 15 which is threaded into or otherwise fixedly secured to one solid end portion 16 of a conveyor track segment 4. Shaft 15 includes a hub assembly 17 which carries guide wheel 10 for free rotation upon shaft 15. The guide wheel 10 is also mounted for free axial movement along shaft 15 to allow compensation for possible tracking fluctuations due to heat expansion and/or other imperfections in the conveyor system 2.

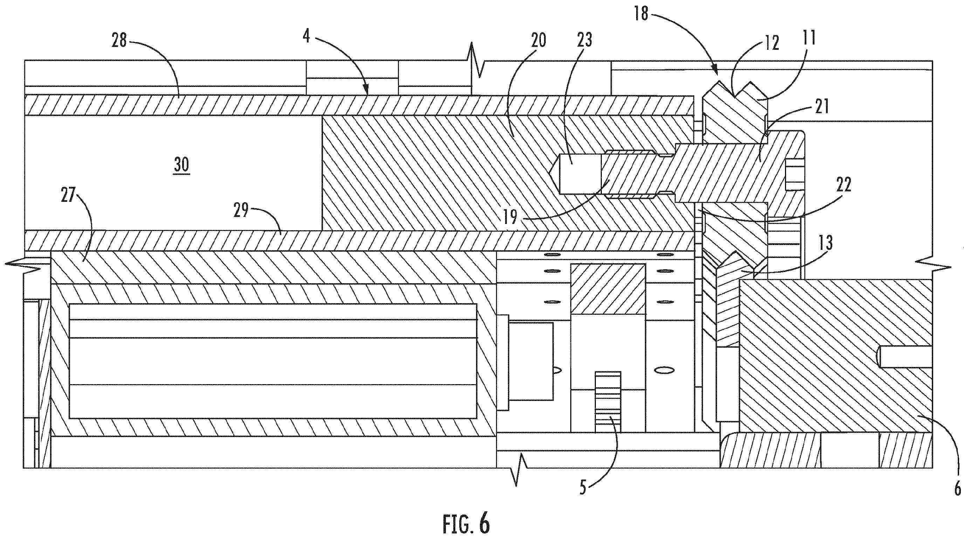

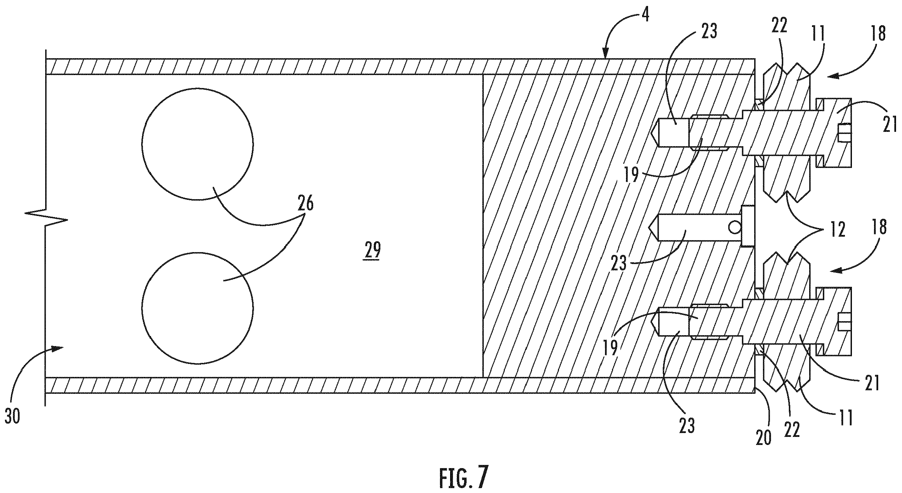

In a similar manner, as shown best in Figs. 6 and 7, in the present embodiment, the opposite side of each conveyor track segment 4 (depicted on right side in drawings), carries a set of two wheel bearing assemblies 18 which are freely rotatable but axially fixed in relation to the conveyor track segment 4. As shown, each wheel bearing assembly 18 is comprised generally of an axle shaft 19 which is threaded into or otherwise fixedly secured to the opposite solid end portion 20 of a conveyor track segment 4. The shaft 19 includes a hub assembly 21 which carries wheel 11 for free rotation upon shaft 19. In this case, however, the guide wheel 11 is fixed from axial movement upon shaft 18 by washer 22 carried upon shaft 19. Accordingly, each wheel 11 is permitted to rotate freely, but is restricted from any axial movement relative to the conveyor track segment 4 upon which it is carried.

While the present embodiment discloses the use of two axially fixed wheel bearing assemblies 18 on one side and one axially free wheel bearing assembly 14 on the other side, other configurations of the wheel bearing assemblies 14 and 18 are certainly conceivable without departing from the invention herein. For instance, it is possible to have two or more axially free wheel bearing assemblies 14 on one side of each conveyor track 4 and a single axially fixed wheel bearing assembly 18 on the other side. It is also possible to have multiple wheel bearing assemblies 14 and/or 18 on opposite sides of each track segment 4.

As shown best in Figs. 7 and 8, in the present embodiment, both of the opposing end portions 16 and 20 of each conveyor segment 4 include multiple threaded axle openings 23 adapted to receive and retain bearing assemblies 14 and 18, respectively. Consequently, depending on the size and needs of the conveyor system being utilized in a given application, additional wheels 10 and 11 on either side of each conveyor segment 4 may be added, if desired. Increasing the number of wheel bearing assemblies on either side of a track segment 4 will tend to increase the stability and accuracy of the track segment registration. However, based on the design and configuration of the respective wheel bearing assemblies 14 and 18, it is even conceivable that a single wheel bearing assembly 14 and 18 on opposite sides of each track segment 4 could be sufficient in certain applications.

In operation, while being moved around the conveyor path, the wheels 10 and 11 of each conveyor track segment 4 become engaged with the track of guideway 13 which is fixed on each transverse side of the conveyor frame 6. The stationary guideway 13 restricts the motion of each conveyor track segment 4 to precisely a straight line at the correct height. The V-shaped feature in each wheel 10 and 11 engages with the V-shaped protrusion of the stationary guideway 13. The wheels 11 at one side of each conveyor track segment 4 are free to rotate only, as the wheels 11 are fixed to the conveyor track segment 4 in the axial direction. The wheels 10 on the other end of each conveyor track segment 4 are free to move axially as well as rotationally. This allows the motion of each conveyor track segment 4 to be precisely controlled without over-constraining each conveyor track segment 4.

For additional control and precision alignment, the present segmented conveyor system 2 also incorporates an optional vacuum system 24 to help hold and maintain proper positioning of the printable substrate 1 upon the conveyor track segments 4 during operation. As noted previously and shown in Figs. 4-8, each track segment 4 is preferably hollow in construction. With this configuration, the principal outwardly facing wall 28 of each hollow conveyor track segment 4 which engages and carries the printable substrate 1 may be formed with a plurality of tiny apertures 25 extending therethrough to the hollow interior thereof. The spaced oppositely facing wall 29 which comprises the underside of each hollow conveyor track segment 4 may also be formed with a plurality of larger openings 26 extending therethrough and communicating with the hollow interior thereof. The vacuum system 24 is secured to the conveyor system 2 underneath the conveyor track segments 4 in such manner as to form a moderate moving seal 27 around the openings 26 as the track segments 4 pass thereover. In this manner, the vacuum system 24 draws air from within the hollow interior of conveyor track segments 4 through openings 26, thus creating a suction through the smaller apertures 25 in the exterior wall 28 of each track segment 4. Consequently, any printable substrate 1 passing over the conveyor track segments 4 in the region of the vacuum system 24 will be drawn against the outer surface of exterior wall 28 thereof, thus helping to firmly hold the substrate 1 against segment 4 and further prevent potential misalignment and/or printing registration errors.

Certain terminology is used herein for purposes of reference only, and thus is not intended to be limiting. For example, terms such as "upper", "lower", "above", "below", "top", "bottom", "upward", "downward", "rearward", and "forward" refer to directions in the drawings to which reference is made. Terms such as "front", "back", "rear", "bottom" and "side", describe the orientation of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second" and other such numerical terms referring to structures do not imply a sequence or order unless clearly indicated by the context.

When introducing elements or features and the exemplary embodiments, the articles "a", "an", "the" and "said" are intended to mean that there are one or more of such elements or features. The terms "comprising", "including" and "having" are intended to be inclusive and mean that there may be additional elements or features other than those specifically noted. It is further to be understood that the method steps, processes, and operations described herein are not to be construed as necessarily requiring their performance in the particular order discussed or illustrated, unless specifically identified as an order of performance. It is also to be understood that additional or alternative steps may be employed.

The disclosure herein is intended to be merely exemplary in nature and, thus, variations that do not depart from the gist of the disclosure are intended to be within the scope of the disclosure. Such variations are not to be regarded as a departure from the spirit and scope of the disclosure, which comprises the matter shown and described herein, and set forth in the appended claims.

The present invention also comprises the following clauses:
Clause 1. A segmented conveying apparatus for use with a high-resolution ink jet printer, comprising:
   (a) a conveyor platform for moving a printable substrate through the printer, said conveyor platform being comprised of a plurality of rigid track segments movably juxtaposed relative to one another about an axis transverse to a direction of travel of said conveyor platform;
   (b) a guideway fixedly connected to the printer for controlling movement of said track segments through the printer;
   (c) a first bearing assembly affixed to one end of each track segment for engaging said guideway and permitting movement of said track segment only in said direction of travel of said conveyor platform; and
   (d) a second bearing assembly affixed to an opposite end of each track segment for engaging said guideway and permitting movement of said track segment in said direction of travel of said conveyor platform and along said axis which is transverse to said direction of travel of said conveyor platform.
Clause 2. The segmented conveying apparatus set forth in Clause 1, wherein said track segments are interconnected and driven together along a path of conveyance by a drive member associated with the printer.
Clause 3. The segmented conveying apparatus set forth in Clause 1, wherein said first bearing assembly and said second bearing assembly each include at least one wheel rotatably connected to one of said track segments.
Clause 4. The segmented conveying apparatus set forth in Clause 3, wherein said wheel includes a central annular groove which mates in guided relation with said guideway.
Clause 5. The segmented conveying apparatus set forth in Clause 4, wherein said groove is substantially V-shaped and said guideway includes a corresponding mating substantially V-shaped protrusion.
Clause 6. The segmented conveying apparatus set forth in Clause 3, wherein said guideway is comprised of a pair of elongated tracks which extend along said direction of conveyor travel and are disposed in guiding relation to said wheels of said first bearing assembly and said wheels of said second bearing assembly.
Clause 7. The segmented conveying apparatus set forth in Clause 1, wherein said track segments are formed of a rigid material selected from a group consisting of steel, aluminum, plastic and carbon fiber.
Clause 8. The segmented conveying apparatus set forth in Clause 1, wherein each of said track segments is constructed with a hollow interior.
Clause 9. The segmented conveying apparatus set forth in Clause 8, wherein a wall of each said track segment includes a plurality of apertures through which suction is created to draw said printable substrate thereagainst.
Clause 10. The segmented conveying apparatus set forth in Clause 8, wherein each of said hollow track segments includes an outwardly facing wall adapted to carry said printable substrate and an opposite facing wall spaced therefrom, said outwardly facing wall having a plurality of small apertures extending therethrough to said hollow interior and said opposite facing wall having at least one opening extending therethrough to said interior, where said opening in said opposite facing wall communicates with a vacuum apparatus to draw air through said opening from said hollow interior and through said apertures in said outwardly facing wall.
Clause 11. A segmented conveying apparatus for use with a high-resolution ink jet printer, comprising:
   (a) a conveyor platform for moving a printable substrate through the printer, said conveyor platform being comprised of a plurality of rigid hollow track segments having opposite closed transverse ends relative to a direction of travel of said conveyor platform;
   (b) a pair of guideway tracks fixedly connected to the printer for controlling movement of said track segments through the printer;
   (c) a first wheel bearing assembly being affixed to one of said closed ends of each track segment for engaging one of said guideway tracks in a manner which permits movement of said track segment only in said direction of travel of said conveyor platform; and
   (d) a second wheel bearing assembly being affixed to the opposite of said closed ends of each track segment for engaging said other guideway track in a manner which permits movement of said track segment in said direction of travel of said conveyor platform and along an axis which is transverse to said direction of travel of said conveyor platform.
Clause 12. The segmented conveying apparatus set forth in Clause 11, wherein said conveyor segments are movably juxtaposed relative to one another about said axis which is transverse to said direction of travel of said conveyor platform.
Clause 13. The segmented conveying apparatus set forth in Clause 11, wherein one each of said pair of guideway tracks is mounted to the printer adjacent one of said opposite transverse ends of said track segments.
Clause 14. The segmented conveying apparatus set forth in Clause 11, wherein each of said wheel bearing assemblies includes a central annular groove which mates in guided relation with one of said guideway tracks.
Clause 15. The segmented conveying apparatus set forth in Clause 14, wherein said groove is substantially V-shaped and said guideway includes a corresponding mating substantially V-shaped protrusion.
Clause 16. The segmented conveying apparatus set forth in Clause 11, wherein a first wall of each said track segment includes a plurality of small apertures through which suction is created to draw said printable substrate thereagainst.
Clause 17. The segmented conveying apparatus set forth in Clause 16, wherein a second wall of each track segment facing opposite that of said first wall includes at least one opening which communicates with a vacuum system for drawing air from within each track segment as it passes thereover.
Clause 18. The segmented conveying apparatus set forth in Clause 17, wherein said vacuum system forms a moving seal around said opening of each of said track segments as said track segment advances over said vacuum system during operation of the conveying apparatus.
Clause 19. A segmented conveying apparatus for use with a high-resolution ink jet printer, comprising:
   (a) a conveyor platform for moving a printable substrate through the printer, said conveyor platform being comprised of a plurality of rigid hollow track segments, each of which has opposite closed transverse ends relative to a direction of travel of said conveyor platform and a plurality of flat, spaced wall sections extending between said opposite ends;
   (b) a pair of guideway tracks fixedly connected to the printer for controlling movement of said track segments through the printer;
   (c) a first wheel bearing assembly being affixed to one of said closed ends of each track segment for engaging one of said guideway tracks in a manner which permits movement of said track segment only in said direction of travel of said conveyor platform;
   (d) a second wheel bearing assembly being affixed to the opposite of said closed ends of each track segment for engaging said other guideway track in a manner which permits movement of said track segment in said direction of travel of said conveyor platform and along an axis which is transverse to said direction of travel of said conveyor platform; and
   (e) means for drawing air through said hollow track segments to help hold said printable substrate in place upon said tack segments as it passes through the printer.
Clause 20. The segmented conveying apparatus set forth in Clause 19, wherein each of said wheel bearing assemblies includes a central annular groove which mates in guided relation with one of said guideway tracks.

## Claims

1. A segmented conveying apparatus for use with a high-resolution ink jet printer, comprising:
(a) a conveyor platform for moving a printable substrate through the printer, said conveyor platform being comprised of a plurality of rigid track segments movably juxtaposed relative to one another about an axis transverse to a direction of travel of said conveyor platform;
(b) a guideway fixedly connected to the printer for controlling movement of said track segments through the printer;
(c) a first bearing assembly affixed to one end of each track segment for engaging said guideway and permitting movement of said track segment only in said direction of travel of said conveyor platform; and
(d) a second bearing assembly affixed to an opposite end of each track segment for engaging said guideway and permitting movement of said track segment in said direction of travel of said conveyor platform and along said axis which is transverse to said direction of travel of said conveyor platform.

2. The segmented conveying apparatus set forth in claim 1, wherein said track segments are interconnected and driven together along a path of conveyance by a drive member associated with the printer.

3. The segmented conveying apparatus set forth in claim 1 or 2, wherein said track segments are connected together but independently movable relative to each other.

4. The segmented conveying apparatus set forth in all of the preceding claims, wherein said first bearing assembly and said second bearing assembly each include at least one wheel rotatably connected to one of said track segments.

5. The segmented conveying apparatus set forth in claim 4, wherein said wheel includes a central annular groove which mates in guided relation with said guideway.

6. The segmented conveying apparatus set forth in claim 5, wherein said groove is substantially V-shaped and said guideway includes a corresponding mating substantially V-shaped protrusion.

7. The segmented conveying apparatus set forth in claims 4, 5 or 6, wherein said guideway is comprised of a pair of elongated tracks which extend along said direction of conveyor travel and are disposed in guiding relation to said wheels of said first bearing assembly and said wheels of said second bearing assembly.

8. The segmented conveying apparatus set forth in claim 7, wherein one each of said pair of elongated tracks is mounted to the printer adjacent one of said opposite ends of said track segments.

9. The segmented conveying apparatus set forth in all of the preceding claims, wherein said track segments are formed of a rigid material selected from a group consisting of steel, aluminum, plastic and carbon fiber.

10. The segmented conveying apparatus set forth in all of the preceding claims, wherein each of said track segments is constructed with a hollow interior.

11. The segmented conveying apparatus set forth in claim 10, wherein a wall of each said track segment includes a plurality of small apertures through which suction is created to draw said printable substrate thereagainst.

12. The segmented conveying apparatus set forth in claim 10, wherein each of said hollow track segments includes an outwardly facing wall adapted to carry said printable substrate and an opposite facing wall spaced therefrom, said outwardly facing wall having a plurality of small apertures extending therethrough to said hollow interior and said opposite facing wall having at least one opening extending therethrough to said interior, where said opening in said opposite facing wall communicates with a vacuum apparatus to draw air through said opening from said hollow interior and through said apertures in said outwardly facing wall.

13. The segmented conveying apparatus set forth in claim 1, wherein each of said track segments is constructed with an open interior and a plurality of flat, spaced wall sections extending between said one end and said opposite end thereof.

14. The segmented conveying apparatus set forth in claim 13, wherein at least one of said wall sections of each said track segment includes a plurality of small apertures through which suction is created to draw said printable substrate thereagainst.

15. The segmented conveying apparatus set forth in claims 13 or 14, including a vacuum system which forms a moving seal with an opening in each of said track segments as said track segment advances over said vacuum system during operation of the conveying apparatus.
